# DEMANDE DE BREVET EUROPEEN

(11) **EP 1 707 434 A1**
(43) Date de publication de la demande: **04.10.2006**
(21) Numéro de dépôt: 06290527.8
(22) Date de dépôt: 31.03.2006
(51) Int. Cl.: B60N 2/58, B29D 31/00, A47C 7/18, B32B 9/02, B60N 2/70

(54) **Procédé de réalisation d'une matelassure comprenant une zone en cuir depourvue de plissures**

(30) Priorité: 31.03.2005 FR 0503158
(71) Demandeur: CENTRE D'ETUDE ET RECHERCHE POUR L'AUTOMOBILE ( CERA), 51100 Reims (FR)
(72) Inventeur: Harnay, Michel, 94500 Champigny sur Marne (FR)
(74) Mandataire: Sayettat, Julien Christian

(57) **Abrégé**

L'invention concerne un procédé de réalisation d'une matelassure (1) de siège automobile, comprenant au moins une zone concave, revêtue de cuir, comprenant les étapes suivantes :
• prévoir une couche de fleur de cuir (2), ladite couche de fleur comprenant une sous-couche d'aspect (3) et une sous-couche d'envers (4),
• effectuer un tannage suivi d'un retannage de ladite couche de fleur,
• effectuer des opérations de finition de ladite couche de fleur,
• découper ladite couche de fleur en éléments et leur associer une couche de matériau souple (5),
• confectionner une coiffe par association desdits éléments entre eux,
• disposer ladite coiffe dans un moule,
• injecter un mélange précurseur de mousse souple (6) dans ladite coiffe et fermer le moule,
• après expansion de la mousse souple (6), démouler la matelassure (1) obtenue,

ledit procédé comprenant une étape d'imprégnation de ladite couche de fleur par une résine synthétique.

## Description

L'invention concerne un procédé de réalisation d'une matelassure de siège automobile revêtue de cuir, une matelassure obtenue par un tel procédé et un siège de véhicule automobile comprenant une telle matelassure.

Il est connu de réaliser une matelassure de siège automobile revêtue de cuir, comprenant au moins une zone concave, par un procédé comprenant les étapes suivantes :
- prévoir une couche de fleur de cuir, ladite couche de fleur comprenant une sous-couche d'aspect et une sous-couche d'envers,
- effectuer un tannage suivi d'un retannage de ladite couche de fleur,
- effectuer des opérations de finition de ladite couche de fleur,
- découper ladite couche de fleur en éléments et leur associer une couche de matériau souple, formée notamment de mousse de faible densité, contre ladite sous-couche d'envers, ladite couche de matériau souple pouvant toutefois être associée à ladite couche de fleur avant découpe en éléments,
- confectionner une coiffe par association desdits éléments entre eux, notamment par couture,
- disposer ladite coiffe dans un moule,
- injecter un mélange précurseur de mousse souple dans ladite coiffe et fermer le moule, la fermeture dudit moule pouvant toutefois être réalisée avant injection dudit mélange,
- après expansion de la mousse souple, démouler la matelassure obtenue.

Contrairement aux procédés basés sur la réalisation d'un bloc en mousse souple, ledit bloc étant ensuite chaussé par une coiffe et associé à cette dernière par des moyens d'association tels que des rappels, un tel procédé, dit « in situ », permet d'obtenir une matelassure d'aspect cuir directement en sortie de moulage, l'envers de la coiffe adhérant à la mousse souple, ce qui évite d'utiliser les moyens d'association susmentionnés.

Un tel procédé permet notamment l'obtention aisée de formes concaves, la concavité étant tournée vers l'utilisateur, propices à un meilleur confort de l'utilisateur.

La couche de matériau souple a notamment pour fonction de former barrière d'étanchéité à l'encontre du matériau précurseur de mousse souple, ceci de sorte à empêcher la mousse souple de pénétrer superficiellement dans la couche de fleur, et de provoquer sa rigidification, ce qui est préjudiciable en terme de confort.

La fleur de cuir comprend une sous-couche d'aspect, formée de fibres courtes et disposées de manière compacte, et une sous-couche d'envers, formée de fibres longues et présentant une compacité moindre.

La force de cohésion entre les deux sous-couches est généralement faible. Lorsqu'une couche de matériau souple est associée contre la sous-couche d'envers, cette dernière se trouve bloquée en allongement. Ainsi, lorsque une forme concave est donnée à la couche de fleur, la sous-couche d'aspect se rétracte et se désolidarise partiellement de la sous-couche d'envers en formant des plissements.

L'invention a pour but de pallier cet inconvénient en proposant un procédé de réalisation d'une matelassure, comprenant au moins une zone concave, permettant d'éviter l'apparition de plissements sur la couche de fleur dans ladite zone.

A cet effet, et selon un premier aspect, l'invention propose un procédé de réalisation d'une matelassure de siège automobile revêtue de cuir, comprenant au moins une zone concave, ledit procédé comprenant les étapes suivantes :
- prévoir une couche de fleur de cuir, ladite couche de fleur comprenant une sous-couche d'aspect et une sous-couche d'envers,
- effectuer un tannage suivi d'un retannage de ladite couche de fleur,
- procéder à une imprégnation de ladite couche de fleur par une résine synthétique, de sorte à associer fermement ladite sous-couche d'aspect et ladite sous-couche d'envers,
- effectuer des opérations de finition de ladite couche de fleur,
- découper ladite couche de fleur en éléments et leur associer une couche de matériau souple, formée notamment de mousse de faible densité, contre ladite sous-couche d'envers,
- confectionner une coiffe par association desdits éléments entre eux, notamment par couture,
- disposer ladite coiffe dans un moule,
- injecter un mélange précurseur de mousse souple dans ladite coiffe et fermer le moule,
- après expansion de la mousse souple, démouler la matelassure obtenue.

Les différentes étapes, déjà pratiquées dans l'art antérieur, sont complétées par une étape complémentaire d'imprégnation, permettant d'associer fermement la sous-couche d'aspect et la sous-couche d'envers, ce qui permet de remédier à l'apparition de plissements sur la sous-couche d'aspect.

Selon un deuxième aspect, l'invention concerne une matelassure réalisée par un tel procédé, ladite matelassure présentant au moins une zone concave, ladite zone concave étant dépourvue de plissements sur sa face d'aspect.

Selon un troisième aspect, l'invention concerne un siège de véhicule automobile comprenant une matelassure réalisée par un tel procédé.

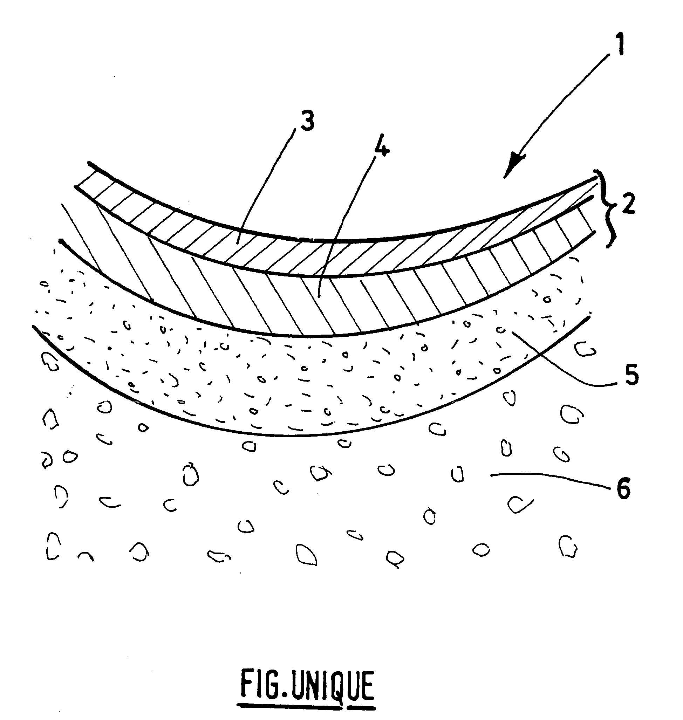

D'autres particularités et avantages de l'invention apparaîtront dans la description qui suit, faite en référence à la figure jointe, qui est une représentation schématique partielle en coupe d'une matelassure réalisée par un procédé selon l'invention.

En référence à la figure, on décrit à présent une zone de matelassure 1 présentant une forme concave, une telle forme étant rendue aisément réalisable par la fabrication de ladite matelassure par le procédé « in situ ».

Une telle matelassure 1 est obtenue par le procédé suivant :
- prévoir une couche de fleur de cuir 2, ladite couche de fleur comprenant une sous-couche d'aspect 3 et une sous-couche d'envers 4,
- effectuer un tannage suivi d'un retannage de ladite couche de fleur,
- procéder à une imprégnation de ladite couche de fleur par une résine synthétique, de sorte à associer fermement ladite sous-couche d'aspect et ladite sous-couche d'envers,
- effectuer des opérations de finition de ladite couche de fleur,
- découper ladite couche de fleur en éléments et leur associer une couche de matériau souple 5, formée notamment de mousse de faible densité, contre ladite sous-couche d'envers,
- confectionner une coiffe par association desdits éléments entre eux, notamment par couture,
- disposer ladite coiffe dans un moule,
- injecter un mélange précurseur de mousse souple dans ladite coiffe et fermer le moule,
- après expansion de la mousse souple, démouler la matelassure 1 obtenue.

La matelassure 1 comprend donc une couche de fleur de cuir 2, ladite couche de fleur comprenant une sous-couche d'aspect 3 et une sous-couche d'envers 4.

L'étape d'imprégnation, permet d'associer fermement la sous-couche d'aspect 3 et la sous-couche d'envers 4. Ceci permet de remédier à l'apparition de plissements sur ladite sous-couche d'aspect.

La sous-couche d'envers 4 est associée, au moins sur une partie de sa surface, à une couche de matériau souple 5, formée par exemple de mousse de faible densité (par exemple 30 kg/m3), par exemple à base de polyuréthanne ou de polyéther.

La couche de matériau souple 5 est associée à la mousse souple 6 formée à partir du matériau précurseur de mousse souple injecté selon le procédé décrit ci-dessus.

La mise en oeuvre de l'étape d'imprégnation est connue de l'homme du métier qui l'utilise en vue de renforcer du cuir. Cependant, cette étape n'est pas réalisée lorsque le cuir est associé en son envers à une couche de matériau souple, elle même associée à une mousse souple, de sorte à permettre l'obtention d'une matelassure dont le revêtement de cuir présente au moins une zone concave, cette zone étant dépourvue de plissements sur sa face d'aspect 3.

## Revendications

1. Procédé de réalisation d'une matelassure (1) de siège automobile, comprenant au moins une zone concave, revêtue de cuir, comprenant les étapes suivantes :
• prévoir une couche de fleur de cuir (2), ladite couche de fleur comprenant une sous-couche d'aspect (3) et une sous-couche d'envers (4),
• effectuer un tannage suivi d'un retannage de ladite couche de fleur,
• effectuer des opérations de finition de ladite couche de fleur,
• découper ladite couche de fleur en éléments et leur associer une couche de matériau souple (5), formée notamment de mousse de faible densité, contre ladite sous-couche d'envers,
• confectionner une coiffe par association desdits éléments entre eux, notamment par couture,
• disposer ladite coiffe dans un moule,
• injecter un mélange précurseur de mousse souple (6) dans ladite coiffe et fermer le moule,
• après expansion de la mousse souple (6), démouler la matelassure (1) obtenue,
ledit procédé étant **caractérisé en ce qu'**il comprend, après l'étape de tannage et de retannage et avant l'étape de finition de la couche de fleur, une étape d'imprégnation de ladite couche de fleur par une résine synthétique, de sorte à associer fermement ladite sous-couche d'aspect à ladite sous-couche d'envers.

2. Matelassure (1) réalisée par un procédé selon la revendication 1, ladite matelassure présentant au moins une zone concave, ladite zone étant dépourvue de plissements sur sa face d'aspect (3).

3. Siège de véhicule automobile comprenant une matelassure (1) selon la revendication 2.
